# EUROPEAN PATENT SPECIFICATION

(11) **EP 3 599 194 B1**
(45) Date of publication and mention of the grant of the patent: **11.03.2026**
(21) Application number: 19168540.3
(22) Date of filing: 10.04.2019
(51) Int. Cl.: B65G 43/02, B65G 67/06, B65G 65/00, B65G 53/56

(54) **ARRANGEMENT FOR AUTOMATED LOGICAL COUPLING TO TRAILER COMPARTMENTS**
ANORDNUNG ZUR AUTOMATISIERTEN LOGISCHEN KOPPLUNG AN ANHÄNGERABTEILEN
AGENCEMENT DE COUPLAGE LOGIQUE AUTOMATIQUE À DES COMPARTIMENTS DE REMORQUE

(30) Priority: 10.04.2018 BE 201805241
(43) Date of publication of application: 29.01.2020
(60) Divisional application: 24169947.9
(73) Proprietor: Constructie Lambrecht NV, 8610 Kortemark (BE); Katholieke Universiteit Leuven KU Leuven Research & Development, 3000 Leuven (BE)
(72) Inventor: CALLEBAUT, Gilles, 9180 Moerbeke-Waas (BE); CRUL, Stijn, 8500 Kortrijk (BE); WIELANDT, Stijn, 9100 Sint-Niklaas (BE); GOEMAERE, Jean Pierre, 9880 Aalter (BE); VAN DER PERRE, Liesbet, 3010 Kessel-Lo (BE); VERHELST, Francis, 8800 ROESELARE (BE)
(74) Representative: Arnold & Siedsma

(56) References cited:
- EP-A1- 0 258 935
- WO-A1-2016/030802
- JP-A- S59 114 217
- US-A- 5 505 496
- US-A1- 2014 129 038
- US-B1- 6 347 723

## Description

### Technical field

The invention relates to an arrangement and a method for identifying whether the supply line between a storage means of a trailer and a joint of a silo is correctly placed. In particular, the invention relates to an arrangement for unloading a trailer comprising goods e.g. bulk material, and correct delivery of such bulk material to a storage facility such as for example a particular silo amongst a plurality of other neighbouring silos, by means of an automated logical coupling mechanism between the trailer and the storage facility.

### Background of the invention

Trailers are designed and often custom-made depending on the application or type of freight they are transporting. In general, trailers comprise of a container and can host several compartments within the container. In these compartments goods, e.g. bulk such as for example stock nutrition is stored to be transferred to silos at farmers or customers' premises. It is essential that the goods are delivered to the intended silo or storage tank. During the delivery of goods, it may be that the trailer truck is parked at significant distance of the silo to be supplied. Discharging of for instance bulk material can be done via modular hoses connected to the trailer on one hand and to the silo on the other hand. Currently, a human operator, e.g. the truck driver, performs the logical coupling or connecting of the hoses, leading to mistakes in delivery particularly at industrial or farm sites where multiple silos are installed close to each other. Such mistakes causing in particular administrative and logistics burden, additional overhead expenses, or may even turn out into wrong or dangerous supply of food to animals.

Relevant references from the art listed below.

EP0258935 A1 discloses an arrangement according to the preamble of claim 1 and a method according to the preamble of claim 5. In particular, the document relates to a system for checking the loading and unloading of a tanker having at least one tank provided with a metal connecting pipe adapted to be coupled via a coupling to one end of a hose having a coupling at two ends, which hose can be coupled to a metal connecting pipe of a storage tank. The hose used is provided with an electric conductor extending between the couplings for the dissipation of electrostatic charges and the chassis of the tanker is grounded. A first inductive coupling is effected between one of the connecting pipes and an interrogator of an electromagnetic identification system, and a second inductive coupling is effected between the other connecting pipe and a passive responder generating a coded signal in an interrogation field. Thus an interrogation field formed by the interrogator cooperates via the first inductive coupling, the one connecting pipe, the electric conductor of the hose, the other connecting pipe, and the second inductive coupling with the responder. The code of the responder is checked prior to loading or unloading.

US2014129038 A1 relates to a crossover protection system including a product transport vehicle having a tank compartment for containing a liquid product, a fluid property sensor positioned to contact liquid product stored in the tank compartment, a system controller, and a valve coupled to the tank compartment. The valve regulates a flow of liquid product from the tank compartment and has a normally locked state. The system controller may compare a received transported liquid type signal from the fuel property sensor indicative of the type of liquid product in the tank compartment and compare the type of liquid product to a stored liquid product type. If the two types match, the crossover protection controller transitions the valve to an unlocked state to allow the liquid product to unload from the tank compartment. If the two types do not match, the crossover protection controller will disable the valve from transitioning to the unlocked state.

US6347723 B1 relates to a security system for flowable products in storage and/or transportation tanks, which have openings at least for filling, removing and/or controlling purposes. A control device and write-read devices are provided for data exchange with connection elements, having a tag and being connectable to openings, each being clearly associated with such tag. With each opening is also associated a closure element as a connection element, on which is located the tag associated with the opening. The associations of tag and opening are controllable and storable in the control device and in the case of a specific association of all the tags with the particular openings a manipulation-free state can be displayed by the control device.

### Aim of the invention

The aim of the invention is to provide an arrangement for correct delivery of goods, such as for instance bulk material, from a trailer to a storage facility e.g. a silo, wherein the correctness of the delivery is guaranteed in an automated manner.

### Summary of the invention

The invention is as stated in the independent claims 1 and 5.

The invention relates to an arrangement for unloading a trailer comprising goods e.g. bulk material, and correct delivery of such bulk material to a storage facility such as for example a particular silo amongst a plurality of other neighbouring silos, by means of an automated logical coupling mechanism between the trailer and the one or more silos. Whereas the terminology 'automated logical coupling' is referring to automated identification, the wording 'connecting' below is rather related to a mechanical connection or physical link.

In a first aspect an arrangement is provided comprising: a storage facility and a trailer. The storage facility comprises one or more silos, having each a joint such as for a example a supply valve or else an air outlet i.e. a joint for air exhaust, whereas the trailer is provided with a storage means (which may in itself have multiple compartments) and a connection means, being connected to the storage means, but also being connectable to one of the supply valves. With connected here (to the storage means) is meant that connected means and storage means are functionally related. The connection means, being for example a reader, is a tangible and visible system or device, whereas the connection itself herewith suggested is not necessarily a (close or direct) contact connection, and hence can as well be a virtual connection, such as for instance a wireless communication connection, or another type of radiation connection. Further, in the arrangement, at least one of the one or more silos, preferably at the joint such as the supply valve, or at the air outlet of the at least one of the one or more silos is (for the purpose of automatic identification and establishing a logical coupling) provided with a first wireless communication means, being for example a tag that can be read by a reader. The supply valve named as possible joint is not necessarily a valve, but may also be any type of connection means attached to or being part of the silo, and through which goods can be supplied to or from the silo. Other possible joints referred to are for instance pipes, couplers, or junctions. The wording supply valve is often used below, mainly to clarify how such joint may look like or can be interpreted as, by means of example. The connection means is moreover movably connected to the storage means, meaning that the connection means can be moved from one position to another, without loss of being functionally related with each other. Changing position of the connection means may lead to a change in the connection provided, meaning either the type of connection (e.g. physical contact, wireless communication possible, inductive coupling enablement) or either the fact that there is all or not a connection remained with a connectable device or system due to the position change. The connection means is movable between a first unconnected joint position, or first unconnected valve position while referring to a supply valve as possible joint, and a second connected joint position, or second connected valve position, according to an embodiment in the vicinity of the first wireless communication means or e.g. tag. The first unconnected valve position is determined as the position wherein there is no connection made between the connection means and the supply valve of the one or more silos. The second connected valve position, on the other hand, is defined as the position wherein a connection between the connection means and the supply valve of the one or more silos is made. According to an embodiment, the connection means being movable refers to the fact that the connection means can be moved from one position to the other while staying attached or physically connected to the trailer or truck. The connection means is provided with a second wireless communication means, being capable to communicate with the first wireless communication means of the supply valve, and this in particular when the connection means is in connection with or connected to the supply valve, implying that the connection means is in the second connected valve position, due to what is mentioned above. While referring to a communication enabled between a first and a second wireless communication means, and hence amongst (two) wireless communication means, the communication itself is implied to be wireless communication. The connection means or e.g. reader can also detect airflow through the joint. In case of a reader for instance, such reader can then be provided with a sensing system for detecting such airflow. By means of example, the sensing system is e.g. a flex or bend sensor for measuring the amount of deflection or bending, such amount being a measure or indication for the airflow passing in the air outlet or air exhaust. Other possible sensing systems for airflow detection are e.g. an accelerometer, or a tilt sensor.

According to an embodiment, the trailer is provided with a third wireless communication means, being capable to communication with the connection means, while this connection means being in either the first unconnected or the second connected valve position. Preferably, the connection means is provided with a fourth communication means being adapted for the communication with the third wireless communication means. While referring to a communication enabled between a third and a fourth wireless communication means, and hence amongst (two) wireless communication means, the communication itself is implied to be wireless communication.

In an embodiment of the invention the type of communication or communication channel between the first wireless communication means and the second wireless communication means is based on NFC (Near Field Communication) technology. Alternatively, RFID technology could be used. In an embodiment of the invention the type of communication or communication channel between the trailer and the connection means, or in other words between the third wireless communication means and the fourth wireless communication means, is based on a (private secured) preferably ad-hoc wireless technology capable of communicating over significant distance, such as for example LoRa or another technology capable of covering the distance between the silo and the trailer.

According to a further embodiment, the trailer is provided with an energy transfer means being capable to transfer energy to the connection means. Preferably, the connection means is provided with energy reception means, being adapted for energy transfer with the energy transfer means from the trailer, while the trailer being adapted for energy transfer via this energy transfer means, when the connection means is in the first unconnected valve position, meaning that the connection means is not connected to the supply valve of the one or more silos. Moreover, according to an embodiment, the connection means then being close to, attached to, connected to or in contact with the trailer. According to an even more preferable embodiment, the connection means comprises an energy storage means, such as for instance a battery, for storing the transferred or received energy.

In an embodiment of the invention, the connection means is adapted for secure connection for a storage facility comprising at least two silos, each with a joint or supply valve, wherein the supply valves are provided in the vicinity of each other. In other words, the supply valves are placed or located in each other's neighbourhood. They are even that close to each other that it may be necessary that the wireless communication needs to be directed, such that there is no interference with unwanted silos, and only the intended silo is in communication.

For sake of clarity, it should be emphasized that the invention relates to mechanical connecting, which can in itself, be performed manually e.g. by the trailer driver, or automated or assisted by automation means like robots, in combination with automated identification (and hence all the requirement communication means) of the connected pair (in casu the supply valve and (assumed to be) accompanying connection means), supporting determining whether such connection is valid or safe, to thereby establish an automated logical (in the sense that the pair belongs together) coupling, which may be further used either as signal to the trailer driver but also a (electrical) signal to machinery (like pumps) attached to the storage means (e.g. to unlock it and start supporting the supply between silo and trailer). Hence as such the invention provides an arrangement providing automated identification for the purpose of establishing (automatically) a logical coupling, if justified based on the identification information obtained, and on top of the mechanical connection. Such arrangement hence enables correct delivery of goods, in an (semi-) automated manner, by providing technical functions such as automated identification and subsequent automated logical coupling. Moreover, the automation loop is herewith closed. In essence the means provided in the arrangement, the connection means and/or valves are for the purpose of automatic identification and establishing a logical coupling.

It is worth noting that a silo may have as associated equipment a plurality of in- or out-lets or connections, even having various shapes, and that even one or more of these in- or out-lets are not supposed to be used for supply of material from and to a trailer. Obviously while such false supply valves may as a mistake be used by the trailer driver or operator, typically such false supply valve would not be provided with wireless communication means to identify it as a valid connection.

The connection means are connected in terms of material flow to a storage means of a trailer, and further being movably and physically connected or attached to either the storage means of a trailer in a first unconnected joint or valve position or either to a joint for air exhaust or supply valve of one or more silos being part of a storage facility in a second connected joint or valve position, this latter connected meaning again being physically connected or attached thereto. The connection means is for example a reader. At least one of said one or more silos, preferably at one of the joints amongst which a joint for air exhaust and/or the supply valve, is (for the purpose of automatic identification and establishing a logical coupling) provided with a first wireless communication means, such as for example a tag, whereas the connection means is provided with a second wireless communication means, capable to communicate with the first wireless communication means of the supply valve, and this particularly whenever the connection means is in the second connected valve position, meaning that the connection means is connected to the supply valve, according to an embodiment in the vicinity of the first wireless communication means or e.g. tag. According to an embodiment, the connection means is particularly suited for connection with a supply valve of a silo, and therefore could also be referred to as a silo valve connection means. The connection means or e.g. reader can also detect airflow through the joint. In case of a reader for instance, such reader can be provided with a sensing system for detecting such airflow.

In an embodiment, the connection means, suited for use when the trailer is provided with a third wireless communication means, is further provided with a fourth communication means adapted for communication with the third wireless communication means, while being in either the first unconnected or the second connected joint or valve position. In an embodiment, the connection means, suited for use when the trailer is provided with an energy transfer means, is further provided with energy reception means adapted for transfer of energy, as received from the energy transfer means provided onto the trailer, when the connection means is in the first unconnected valve position, more preferably the connection means comprises an energy storage means, such as for example a battery system. In an embodiment, the connection means is adapted for secure connection for a storage facility comprising at least two silos, each with a joint e.g. a supply valve, wherein the supply valves are in the vicinity of each other.

In an aspect not according to the claimed invention a trailer is provided with a storage means and the connection means. According to an embodiment, the trailer is provided with a third wireless communication means adapted for communication with the fourth communication means.

In an aspect not according to the claimed invention a joint such as a supply valve or else an air outlet i.e. a joint for air exhaust is provided, suited for silos of a storage facility comprising one or more silos, such silos being connectable to a connection means of a trailer, such trailer being provided with a storage means. The supply valve is moreover (for the purpose of automatic identification and establishing a logical coupling) provided with a first wireless communication means being adapted for wireless communication with the connection means whenever the connection means and the supply valve are physically connected to or in contact with each other.

In an aspect an arrangement is provided comprising a storage facility having one or more silos, each with a joint for air exhaust and a joint or supply valve for transferring material to the one or more silos. The arrangement also comprises a trailer from which material is being transferred to the one or more silos. The trailer is provided with a storage means and a connection means connected to the storage means and connectable to one of the joints. The connection means is for example a reader. At least one of the one or more silos is provided with a first wireless communication means, being for example a tag. The connection means is movable between a first unconnected joint position and a second connected joint position, according to an embodiment in the vicinity of the first wireless communication means or e.g. tag. The trailer is further provided with a second wireless communication means, capable to communicate with the first wireless communication means or e.g. tag, when the connection means or e.g. reader is in the second connected joint position. The connection means or e.g. tag can also detect airflow in the air exhaust when connected to the at least one of the one or more silos, preferably at one of the joints.

In an aspect a method is provided for identifying whether the supply line between a storage means of a trailer and a joint or supply valve of a silo for transferring material from the trailer to a storage facility comprising at least the silo with the joint amongst one or more silos, each having one or more joints being e.g. a supply valve or a joint for air exhaust, is correctly placed. The silo is provided with a first wireless communication means, being e.g. a tag. The identification method comprises the following steps. First, bringing a connection means, being e.g. a reader, related to the storage means, to the joint, being in the vicinity of the first wireless communication means or e.g. tag. The connection means is provided with a second wireless communication means, capable to communicate with the first wireless communication means when the connection means is in a connected joint and the connection means or e.g. reader can also detect airflow through the joint. Next, upon communication between the wireless communication means, air being e.g. generated by the trailer is blown through the joint. Then, upon detection of airflow through the joint, approval is provided for transferring material from the trailer to the silo of the storage facility.

In an aspect not according to the claimed invention a trailer is provided with a storage means. The trailer comprises means for wireless communication and a system for automated logical coupling between the trailer and a storage facility comprising one or more silos. The trailer is adapted, to release material as stored in the storage means to the appropriate of the one or more silos of the storage facility.

Alternatively to the first aspect mentioned earlier, in an aspect not according to the claimed invention an arrangement is provided comprising: a storage facility and a trailer. The storage facility comprises one or more silos, having each a joint such as for a example a supply valve, whereas the trailer is provided with a storage means (which may in itself have multiple compartments) and a connection means, being connected to the storage means, but also being connectable to one of the supply valves. The connection means is a tangible and visible system or device, whereas the connection itself herewith suggested is not necessarily a (close or direct) contact connection, and hence can as well be a virtual connection, such as for instance a wireless communication connection, or another type of radiation connection. Further, the supply valve of the one or more silos is (for the purpose of automatic identification and establishing a logical coupling) provided with a first wireless communication means. The supply valve named as possible joint is not necessarily a valve, but may also be any type of connection means attached to or being part of the silo, and through which goods can be supplied to or from the silo. Other possible joints referred to are for instance pipes, couplers, or junctions. The wording supply valve is often used below, mainly to clarify how such joint may look like or can be interpreted as, by means of example. The connection means is moreover movably connected to the storage means, meaning that the connection means can be moved from one position to another. Changing position of the connection means may lead to a change in the connection provided, meaning either the type of connection (e.g. physical contact, wireless communication possible, inductive coupling enablement) or either the fact that there is all or not a connection remained with a connectable device or system due to the position change. More in particular, the connection means is movable between a first unconnected joint position, or first unconnected valve position while referring to a supply valve as possible joint, and a second connected joint position, or second connected valve position. The first unconnected valve position is determined as the position wherein there is no connection made between the connection means and the supply valve of the one or more silos. The second connected valve position, on the other hand, is defined as the position wherein a connection between the connection means and the supply valve of the one or more silos is made. According to an embodiment, the connection means being movable refers to the fact that the connection means can be moved from one position to the other while staying attached or physically connected to the trailer or truck. The connection means is provided with a second wireless communication means, being capable to communicate with the first wireless communication means of the supply valve, and this in particular when the connection means is in connection with or connected to the supply valve, implying that the connection means is in the second connected valve position, due to what is mentioned above. While referring to a communication enabled between a first and a second wireless communication means, and hence amongst (two) wireless communication means, the communication itself is implied to be wireless communication.

In summary the invention, while providing the required special functionalities described, takes into account specifics of the arrangements in terms of required distances, operating (harsh) conditions and addresses this by providing an integrated approach in relation to (i) at electronic level (wireless) communication and related energy needs and (ii) at mechanical/physical level, the movability, the (safe) connections and a robust package. The invention addresses the mutual influences of those specifics and design choices.

### Brief description of the drawings

Figure 1 shows an embodiment of an arrangement for automated logical coupling of a trailer to a silo in accordance with the invention.
Figure 2 shows another embodiment of an arrangement for automated logical coupling of a trailer to a silo in accordance with the invention.
Figure 3 shows an embodiment of a wireless communication system between a trailer and a silo, for automated logical coupling thereof,
Figure 4 shows yet another embodiment of an arrangement for automated logical coupling of a trailer to a silo in accordance with the invention.
Figure 5 shows an embodiment of a connection means as part of the arrangement of Figure 4 for automated logical coupling of a trailer to a silo in accordance with the invention.
Figure 6 shows an embodiment of a discharging system making use of an arrangement for automated logical coupling of a trailer to a silo in accordance with the invention.
Figure 7 shows an embodiment of an arrangement for automated logical coupling of a trailer to a silo, in combination with the principle of airflow exhaust of a silo, in accordance with the invention.
Figure 8 shows yet another embodiment of an arrangement for automated logical coupling of a trailer to a silo in accordance with the invention.
Figure 9 shows another embodiment of an arrangement for automated logical coupling of a trailer to a silo, in combination with the principle of airflow exhaust of a silo, in accordance with the invention.
Figure 10 shows an embodiment of a bulk load station for loading a trailer transporting material to be transferred to a silo,
Figure 11 shows an embodiment of a control system user interface for visualizing material as stored in a trailer to be released to the one of the appropriate silos,
Figure 12 shows an embodiment of tag and reader for automated logical coupling of a trailer to a silo,
Figure 13 shows an embodiment of the working principle of tag-and-reader system for automated logical coupling of a trailer to a silo,
Figure 14 shows an embodiment of a sensing system for detecting airflow in an arrangement for automated logical coupling of a trailer to a silo
Figure 15 shows a graphical representation of the airflow as detected in an arrangement for automated logical coupling of a trailer to a silo

### Detailed description of the invention

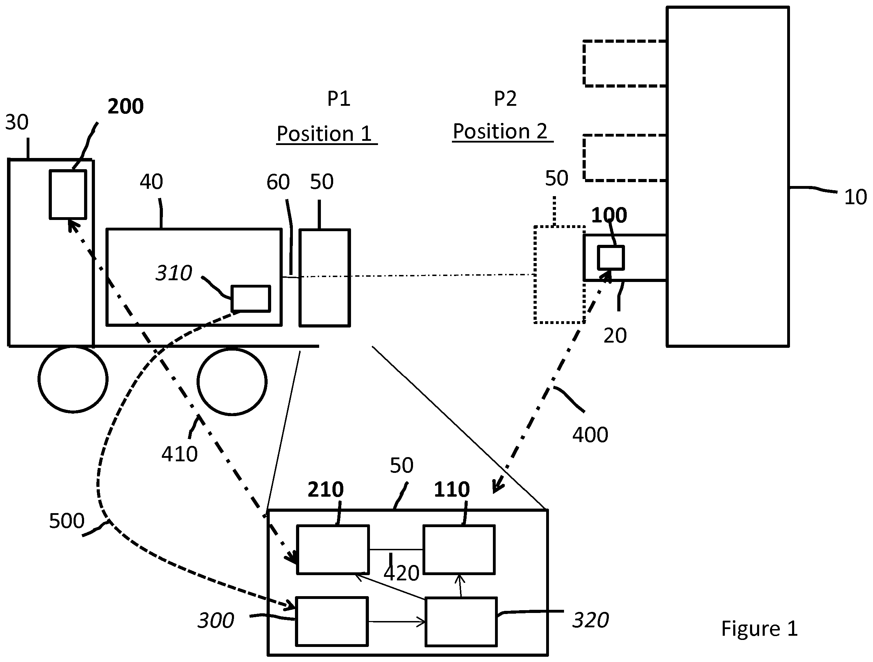

Referring to Figure 1, the invention relates to arrangements comprising a storage facility 10 and a trailer 30. The storage facility 10 is provided with one or more silos, each silo having a supply valve 20, whereas the trailer 30 is provided with a storage means 40 and a connection means 50. The storage means 40 on the trailer 30 contains or is intended to contain materials suited for storage in silos. The connection means 50 is connected to this storage means 40 and is connectable to one of the supply valves 20, to enable transfer of material from the trailer 30 to the silos. According to an embodiment, the invention relates to the above arrangements wherein the storage facility 10 comprises of at least two silos, each with a supply valve 20, wherein the valves 20 are occurring in the vicinity of each other, and wherein the connection means 50 is adapted to cope with the technical problems arising with such neighbouring silo-valve context.

In the field of such arrangements, it is important that the connection to a supply valve 20 is automatically monitored and secured in order to ensure transfer of the correct material in or from the silo. The invention relates to an adapted arrangement wherein the supply valve 20 is provided with a first wireless communication means 100 and an adapted connection means 50 being movably connected to the storage means 40 between a first unconnected (to said valve 20) and a second connected (to said valve 20) position P1, P2 and the connection means 50 further being provided with a second wireless communication means 110, capable to communicate 400 bilaterally with the first wireless communication means 100 when the connection means 50 being in the connected position P2, meaning that the connection means 50 is connected with the supply valve 20 of a silo. The bilateral or 2-way communication 400, indicated by means of the two arrows, means that communication is enabled to and from the silo, or to and from the connection means 50 of the trailer 30. Further, the trailer 30 may be provided with a third wireless communication means 200, being capable to communicate 410 bilaterally with a fourth communication means 210 provided within the connection means 50.

The trailer 30 may comprise a hose 60 or another (type of tubular or cylindrical) means for transferring and discharging the material e.g. food from the storage means 40 of the trailer 30 to the silo of the storage facility 10. Such hose 60 is thus connected with the storage means 40 of the trailer 30 on one hand, and is connectable with a supply valve 20 of the silo (hence storage facility 10) on the other hand.

In Figure 1, the trailer 30 is also provided with an energy transfer means 310 being capable to transfer energy with the connection means 50. Preferably, the connection means 50 is provided with an energy reception means 300, being adapted for energy transfer 500 with the energy transfer means 310 provided onto the trailer 30, when the connection means 50 is in the first unconnected valve position P1, meaning that the connection means 50 is not connected to the supply valve 20 of a silo. On the other hand, the connection means 50 being in the first unconnected valve position P1 is attached to, connected to, in contact with, close to or in the neighbourhood of the trailer 30, such that energy transfer 500 can take place either wired or else wirelessly such as e.g. via inductive coupling or RF wireless charging. As illustrated, the connection means 50 may also comprise an energy storage means 320, such as for instance a battery, for storing the transferred or received energy. Within the connection means 50, more in particular between the second and the fourth wireless communication means 110, 210 a link 420 may be foreseen for exchanging data amongst them. This way the received or transmitted data from the communication 400 e.g. NFC or RFID, can be shared or exchanged with the communication 410 e.g. LoRa, and thus as an example the transferred data from a near field communication can be transferred to a longer-range type of communication, or vice versa. The link 420 implicates that the second and the fourth wireless communication means 110, 210 are in some way also connected to each other, be it wired via an electronic platform onto which both are provided within the connection means 50, or either enabled wirelessly in a non-contact way.

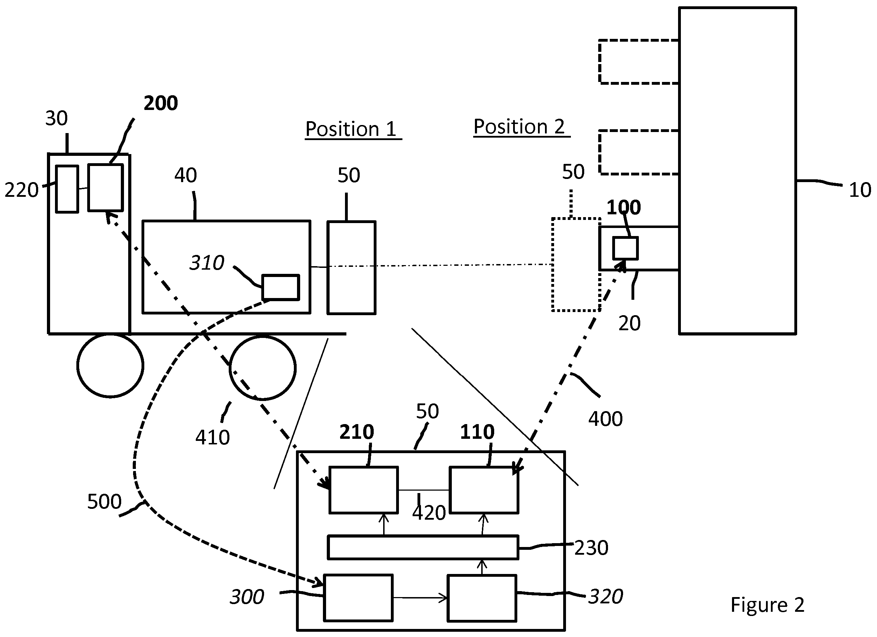

Referring now to Figure 2, the trailer 30 can also be provided with a computer control system 220 being in wired connection with or either wirelessly connected to the third wireless communication means 200. The connection means 50 may further comprise a processor 230, for processing data that is received, transferred or transmitted via the wireless communications 400, 410 mentioned.

The processor 230 is for instance integrated in an electronic board or platform onto which second and fourth wireless communications means 110, 210 may also be embedded.

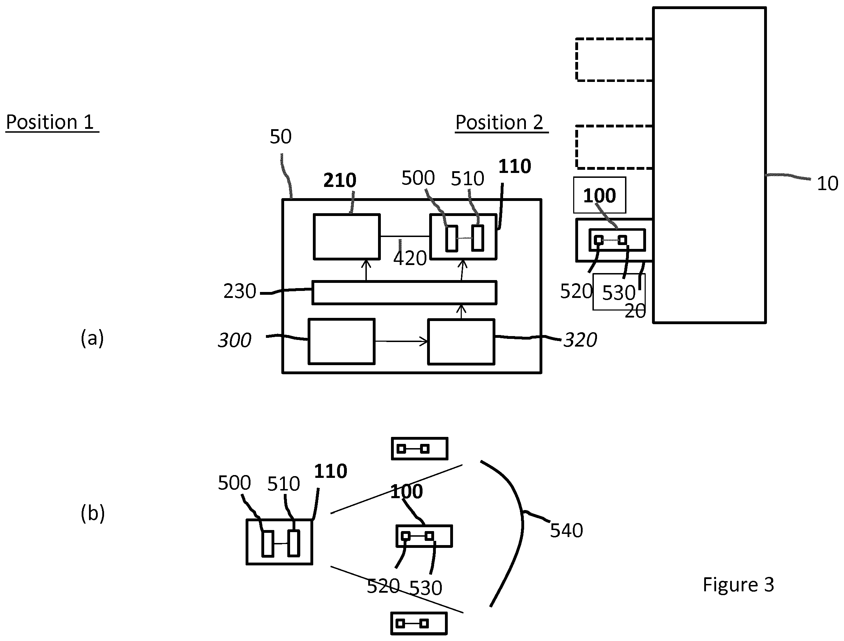

According to an embodiment as depicted in Figure 3, the first wireless communication means 100 may comprise a first antenna 520 and a first wireless frontend 530, while the second wireless communication means 110 may comprise a second antenna 510 and a second wireless frontend 500, being adapted to the first antenna 520 and the first wireless frontend 530 respectively. By means of example such wireless frontend 500, 530 is for instance an RF chip connected to its respective antenna 510, 520. Figure 3(a) shows the connection means 50 placed in position P2, i.e. the second connected valve position P2, and hence being in connection with the supply valve 20 of a silo. The connection implies that a connection is made although not necessarily having physical contact of both parts. In other words, the connection means 50 and the supply valve 20 may still be spaced apart although being physically rather close to each other, such that e.g. a near field communication between both is feasible. In an embodiment of the invention, the connection means 50 is adapted for secure connection for a storage facility 10 comprising e.g. at least two silos, each with a supply valve 20. According to a further embodiment, the storage facility 10 for instance comprises three silos, each having a supply valve 20, and moreover the three supply valves 20 (one for each silo) are provided in the vicinity of each other. In other words, the supply valves 20 are placed or located in each other's neighbourhood. They are even that close to each other that it may be necessary that the wireless communication 400 between the connection means 50 and either one of the supply valves 20 needs to be directed, such that there is no interference with neighbouring supply valves of unwanted silos, and only the intended silo is in communication. In an embodiment, as shown in Figure 3 (b) the wireless communication system for the wireless communication 400 between connection means 50 and supply valve 20 comprises an antenna system defined by the first and the second antenna 520, 510 as mentioned above, while being adapted in wireless communication therein between, whenever the connection means 50 is brought in the second connected valve position P2, i.e. the connection means 50 is connected with and focused to the supply valve 20 of a silo. As illustrated, the wireless communication of the antenna system is operating within a predefined angle 540, such that the communication is more directed and hence only the intended supply valve 20 or silo becomes in connection, whereas the other neighbouring supply valves of adjacent silos are as a consequence beyond reach.

It is worth noting at this stage some particularities of such arrangement in general to be taken in to account when providing a suitable arrangement or parts thereof.
(i) As there exist many silos and many valves, the first wireless communication means 100 should be low cost, preferably passive and should not require much maintenance.
(ii) During a phase of transfer of material, hence while being in said second connected (to said valve 20) position P2, the connection means 50 can be brought close to said silo valves 20, therefore the chosen communication here can be a low-power, short range communication approach.
(iii) However in such phase, the trailer 30 might be at a relative far distance from said silo, hence for the monitoring and securing context mentioned above, said trailer 30 and said connection means 50 should be provided with a chosen communication for that purpose, i.e. should be able to handle such distance, while still being low-power.
(iv) The operating conditions of such arrangement are harsh in terms of dust, mud, dirt ... and handling of the connection means 50, hence the electronic means there within added for providing said wireless communications, are adapted for embedding in a (robust) closed safe package and hence be in itself an autonomous system, with its own energy storage means 320 like a battery, preferably rechargeable.
(v) Given the above, said trailers 30 are provided with a (contactless) energy transfer means 310, being capable to transfer energy 500 with said connection means 50, even though being in the above mentioned closed safe package.
(vi) The power consumption of both communication channels (one between said first wireless communication means 100 and said second communication means 110 and another between said trailer 30 and said connection means 50, or in other words between said third wireless communication means 200 and said fourth communication means 210), the duration of said material transfer phase and the energy storage capacity of said energy storage means 40 must be adapted to each other, possibly taking into account other circuitry available within said adapted connection means 50, which may provide some extra functionalities.

As the invention relates to adapted arrangements designed for avoiding liabilities related to wrong release of materials from a storage facility, by providing automatic monitoring (and implement related security procedure thereon - such as release only after confirmation of the right connection), the adapted arrangement should be intrinsically safe and secure itself, by providing a trust worth logic (on or available when needed) communication channels (as above explained), reliable robust physical components (such as the connection means with its required electronics) and given the particular context of possibly having multiple near-by valves (each possibly related to different materials), hence the sensitivity of the involved communication means (and their antennas in particular) must be adapted also to cope with such set-up. The above can be further supplemented with mechanical measures such as choice of suitable compatible forms for the parts of said connection means and the parts of said valves that need to connect to enable the wireless communication.

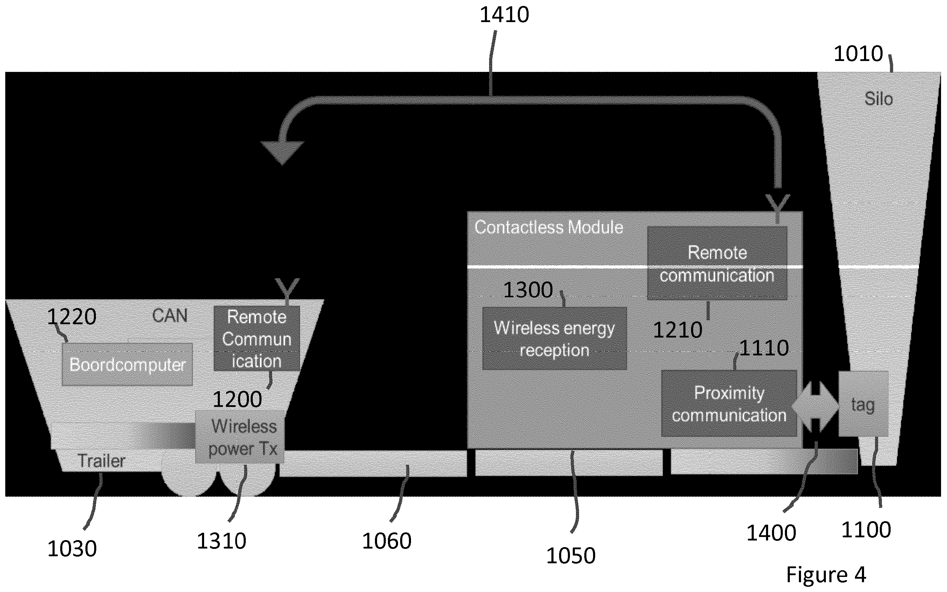

With an exemplary system depicted in Figure 4, the invention relates to an autonomous system for logically coupling a silo 1010 to a trailer 1030 with one or more compartments containing goods to be transferred to the silo 1010. The system comprises a contactless module 1050 to be mounted on or to be connected to a hose 1060, wherein the contactless module 1050 can wirelessly communicate 1400 on the one hand to a silo 1010 in close proximity, and on the other hand can wirelessly communicate 1410 to the trailer 1030. The proximity communication 1400 is a bidirectional communication between a proximity communication means 1110 being part of the module 1050 and a tag 1100 mounted, installed or attached onto the silo 1010. The remote communication 1410 is a bidirectional communication between a remote communication means 1210 being part of the module 1050 and another remote communication means 1200 mounted, installed or attached onto the trailer 1030. The two wireless technologies 1400, 1410 specifically can be functionally fit as follows:
- The (close) proximity communication 1400 has a range limited to a few centimeters and hence will avoid incorrect capturing of signals of other sources than the intended silo. 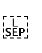
- The remote communication 1410 to the trailer 1030 can cover several tens or a few hundreds of meters. It is set-up as a direct communication link from the module 1050 to the trailer 1030, without the need for an external network or network operator. An appropriate technology is for example LoRa, which allows for low power transmission. It operates below 1GHz, which provides a good range and penetrates through walls more easily than higher frequencies. 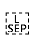

The approach to communicate with two low (power) technologies offers the combined advantages of wireless identification based on passive tags at a range limited to a secure close proximity, while the transferring of the goods can be controlled remotely.

The module 1050 further comprises means, i.e. a wireless energy reception member 1300, for charging it without any cable connections. Wireless power charging is for instance further enabled by means of provisions or equipment installed onto the trailer 1030, and thus wireless power can be received from a wireless power transmitter 1310 provided on the trailer 1030. Hence, the module 1050 can be fully enclosed and can operate without contacts, making it robust to harsh operating conditions. An on-board computer 1220 may also be installed on the trailer 1030. The autonomous system can provide non-ambiguous logical coupling of a silo to (a compartment of) a trailer 1030 in order to ensure correct transferring, e.g. loading or unloading of goods. Please note that while referring to the energy harvesting aspect, both terms power and energy are used while covering the same principle.

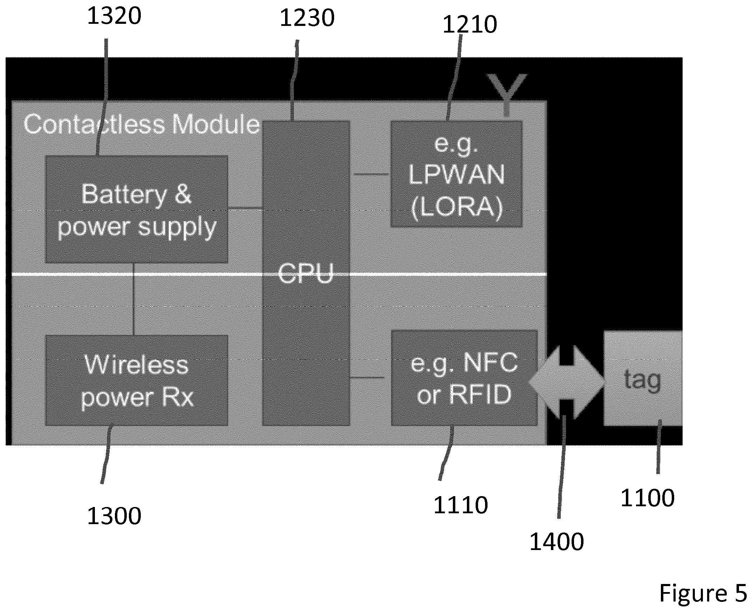

The proximity communication 1400 between the hose 1060 and the silo 1010 can be based on inductive principles for which a tag 1100, e.g. passive, is mounted on the silo 1010. This tag 1100 can hold identification information of the silo 1010, and can be read by the module 1050. The module 1050 can hence be seen as a reader or a scanner. According to an embodiment, the module 1050 supplies energy to the tag 1100 for providing identification information. The contactless (i.e. no touching or physical contact with the tag is made) module 1050 can be implemented for example as schematically illustrated in Figure 5.

The (close) proximity communication 1400 can for example be implemented with Near Field Communication (NFC) technology, which conveniently limits the range to close proximity. It could also be implemented based on RFID technology wherein the power of the system is limited to avoid that the module 1050 would incidentally pick a signal from another nearby silo.

The mechanical coupling of the system can be based on a specific shape of the module 1050 itself and a corresponding holder for this module 1050 at the side of the silo 1010, such that they couple smoothly without the need to fix them with specific effort from the operator:
- The module 1050 and tag 1100 communicate very well when the module 1050 is in the holder, and thus transmitter and receiver are held close to each other.
- The module 1050 easily detaches from the holder when the hose 1060 is moved, and hence the communication 1400 is broken.

The remote communication 1410 can for example be implemented with Low Power Wide Area Network technology, such as for example LoRa, which is well suited to support low power connectivity up to several hundreds of meters.

The contactless energy harvesting can for example be implemented based on wireless power transfer. The charging component could be placed on the trailer 1030 such that the recharging can happen during the transportation. According to an embodiment, the module 1050 may further be provided with energy storage means 1320, i.e. a battery, for storing the wirelessly received power, as received by means of the wireless power receiver 1300. A computer processor 1230 may also be part of the module 1050, for example for processing the transferred data.

For the elaboration or operation of the system particular choices can be made for some of the technological components. Preferred choices and their alternative solutions are listed below. In order to avoid detail, only high-level aspects have been included.
- Short range/proximity communication: Near Field Communication (NFC) is selected as it allows the tags to be very low cost and pure passive devices. The passive tag does not need any energy provision on itself, as it will provide a response in a communication powered by the signal that is transmitted by the NFC reader which will be integrated in the module on the hose. NFC communication is based on 'near field' and hence is 'by construction' confined to a few cm range. Alternative solutions that may be considered:
   ∘ RFID: This technology exists in different types, including operation with passive and active tags, and working at different frequencies. They mostly have a range > 10cm and hence could pick up signals from other silo's. The range will depend on the specific implementation of both the reader (power, antenna) and the tag (antenna). A dedicated design therefore could also be an option for the hose-silo communication application.
   ∘ Bluetooth and Zigbee: both are low data rate technologies. They however cannot operate based on passive tags and their range extends several meters. Hence they are less relevant candidates for the proximity communication.
- Communication from the hose to the trailer: LoRa is selected as Low Power Wide Area Network solution. The range is expected to largely suffice, as confirmed by stand-alone validation. The option to set- up a 'local gateway' on the trailer can be exploited, while realizing a private network, which can be done in the unlicensed band. There, the connection to the ICT system on the trailer 30, such as for example a CAN bus can be made. Alternative solutions that may be considered:
   ∘ Cellular systems: GPRS or more recent data-oriented cellular technologies such as Narrowband-loT (NB-loT) can also provide long-range coverage for relatively low data rate. This communication typically works in licensed bands, will be routed via base stations and needs to be supported by an operator. It may probably prohibit direct communication to the trailer and would incur costs for usage of the network.
   ∘ Alternative Low Power Wide Area Network Technology SIGFOX. Sigfox also enables low power and low range. However, one cannot easily set up a private network, and the traffic would need to be routed to the network operator. This prohibits direct communication to the trailer. Moreover, Sigfox network coverage is not provided in all countries.
   ∘ WiFi: The range of conventional WiFi may not be sufficient in the possible situations in which the system should operate. WiFi could support a (much) higher throughput, which is not needed for this application.
   ∘ Bluetooth and Zigbee: these technologies will probably not reach far enough. By means of example, specific ZigBee derivative can reach up to 15-20km if operating < 1GHz, so Typical ZigBee may be rephrased in 2,4 GHz.

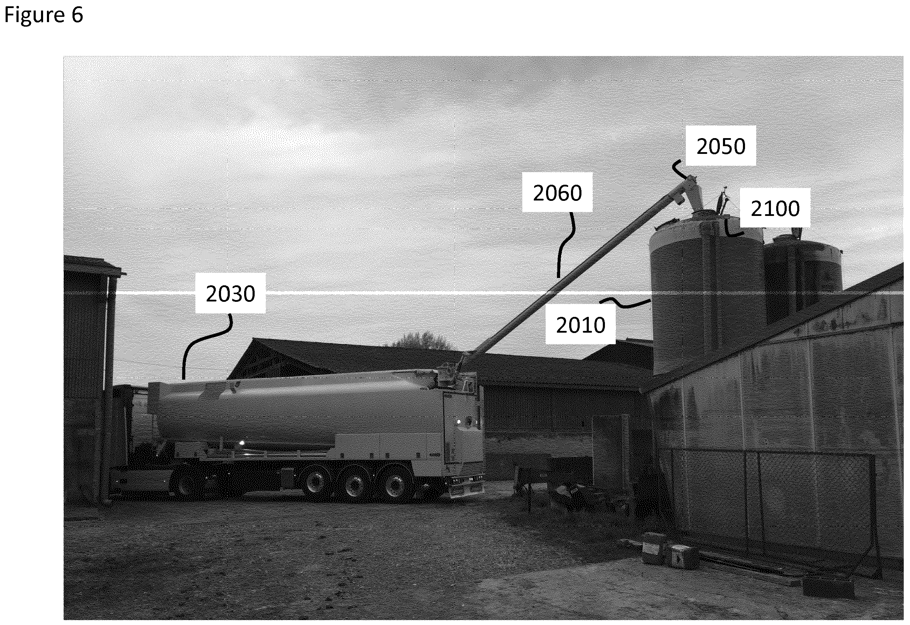

Figure 6 shows an embodiment of a discharging system making use of an arrangement for automated logical coupling of a trailer 2030 to a silo 2010 in accordance with the invention. A screw is here used for the discharging system and is provided inside a connecting tube 2060, connecting together with the connection means 2050, the trailer 2030 with the silo 2010. A first wireless communication means or tag 2100 is provided onto the silo 2010, for example as indicated in Figure 6, for enabling the automated logical coupling, i.e. the automated identification.

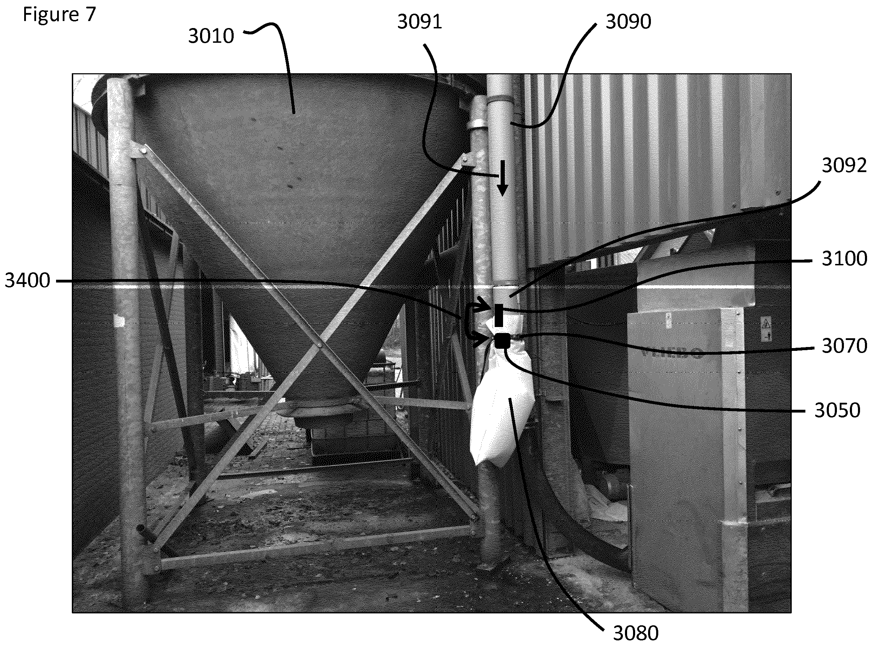

Figure 7 shows an embodiment of an arrangement for automated logical coupling of a trailer to a silo, in combination with the principle of airflow exhaust of a silo, in accordance with the invention. Whenever food is delivered or supplied from the hose to the silo 3010, air is first blown into the hose and delivered to the silo 3010. In order to prevent that the silo 3010 would explode, the air that is blown in, is taken away via an air exhaust 3090 provided with each silo 3010. Diverting airflow 3091 here implies that not only air but also dust particles will be conveyed together with the airflow 3091. In order to capture such dust particles, a collection means such as a dust bag 3080 is for instance attached to the outlet 3092 of the air exhaust 3090, herewith closing the air exhaust 3090 i.e. the pipe through which airflow 3091 including dust particles are exhausted. The closing is not entirely or hermetically, meaning that although dust particles are remained in the bag 3080, the air can leave the bag 3080 being porous or semi-permeable and hence provided with minuscule holes or pores. While providing the collection means as mentioned, an identification system can also be included herewith. Therefore, the outlet 3092 of the air exhaust 3090 is e.g. provided with a tag 3100, which can be read by a reader 3050 being comprised in a belt 3070 for attaching the dust bag 3080 to the outlet 3092 of the air exhaust 3090. In particular, the belt 3070 and hence the reader 3050 being fixed thereon, are attached to the air exhaust outlet 3092 in the vicinity of the tag 3100 for enabling wireless communication 3400 amongst them. According to an embodiment, the reader 3050 can also detect airflow 3091, next to detecting the tag 3100. It is moreover noted that airflow 3091 can only be detected or maybe even observed visually when the hose is connected to the correct silo 3010, i.e. the silo 3010 where food supply is required. A double indication is herewith given for guaranteeing correct delivery of bulk material to a storage facility such as for example a particular silo amongst a plurality of other neighbouring silos, by means of an automated logical coupling mechanism between the trailer and the storage facility, and exhaust airflow detection.

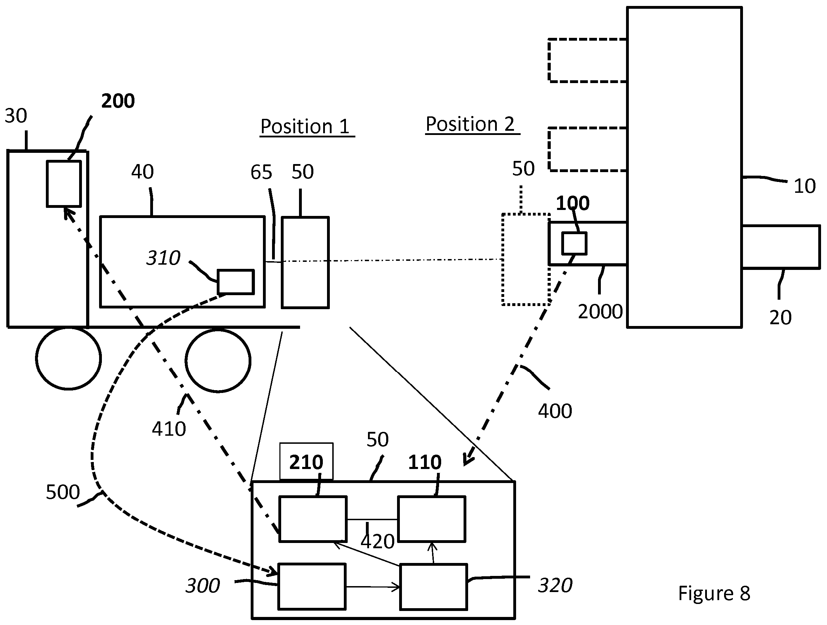

In relation to the embodiment above, in general wording, as shown in Figure 8, the invention relates to arrangements comprising a storage facility 10 and a trailer 30. The storage facility 10 is provided with one or more silos, each silo having a supply valve 20 and an air exhaust 2000, whereas the trailer 30 is provided with a storage means 40 and a connection means 50. The storage means 40 on the trailer 30 contains or is intended to contain materials suited for storage in silos. The connection means 50 is connected to this storage means 40 and is connectable to one of the air exhausts 2000 while further a supply means such as for example a pipe (not shown) is connectable to supply valves 20, to enable transfer of material from the trailer 30 to the silos.

Hence, according to an embodiment of the invention, an arrangement is provided comprising a storage facility 10 comprising one or more silos, each silo having a joint 2000 for air exhaust and a joint 20 as supply valve for transferring material, e.g. bulk food, there through to or from the silos. Such joints 20, 2000 can be separate joints, or either can be the same for both air exhaust and as supply valve, and hence having both functions integrated in one single joint. The arrangement also comprises a trailer 30, to or from which the material is transferred. The trailer 30 is provided with a storage means 40 and a connection means 50, e.g. a reader, connected to the storage means 40 and connectable to one of the joints 20, 2000. The arrangement is characterized in that at least one of the one or more silos is provided with a first wireless communication means 100, e.g. a tag that can be read by a reader, and the connection means 50 is movable between a first unconnected joint position P1 and a second connected joint position P2. According to an embodiment, the connection means 50 or e.g. reader is in the vicinity of the first wireless communication means 100 or e.g. tag.

The trailer 30 is further provided with a second wireless communication means 110, capable to communicate 400 with the first wireless communication means 100 when the connection means 50 being in the second connected joint position P2. While being in this second connected joint position P2, the connection means 50 or e.g. reader can also detect airflow in the air exhaust being connected to the joint 2000. Alternatively, the connection means 50, being e.g. a reader, is connected to the supply valve 20.

According to the invention the connection means 50 or e.g. reader comprises an airflow sensor, such as a flex sensor or bend sensor for measuring the amount of deflection or bending, an accelerometer and/or a tilt sensor. The amount of deflection or bending in case of a flex sensor or bend sensor, being a measure or indication for the airflow passing in the air exhaust.

The above arrangement supports the following identification method, in accordance with the invention. The invention thus provides a method for identifying whether the supply line between a storage means 40 of a trailer 30 and a joint 20 of a silo for transferring material from the trailer 30 to a storage facility 10 comprising at least such silo with such joint 20 amongst one or more silos, each having one or more joints 20, 2000, is correctly placed. The joints 20, 2000 can be either a supply valve 20, or a joint 2000 for air exhaust, or else a joint functioning both as supply valve and as joint for air exhaust. At least one of the one or more silos is provided, preferably at the joint 20, 2000, with a first wireless communication means 100, such as e.g. a tag. The identification method comprises following steps. First, a connection means 50, such as e.g. a reader for reading the tag, related to the storage means 40, is brought to the joint 2000, whereas the joint is in the vicinity of the first wireless communication means 100. The connection means 50 is provided with a second wireless communication means 110, being capable to communicate 400 with the first wireless communication means 100 when the connection means 50 is in a connected joint position P2. The connection means 50 can further detect airflow through the joint 20, 2000, and is hence also provided with a sensing system therefore. Secondly, upon communication between the wireless communication means 100, 110, air e.g. being generated by the trailer 30, is blown through the joint 20, 2000. Finally, upon detection of airflow in the joint 20, 2000, approval is provided for transfer of material from the trailer 30 to the silo of the storage facility 10.

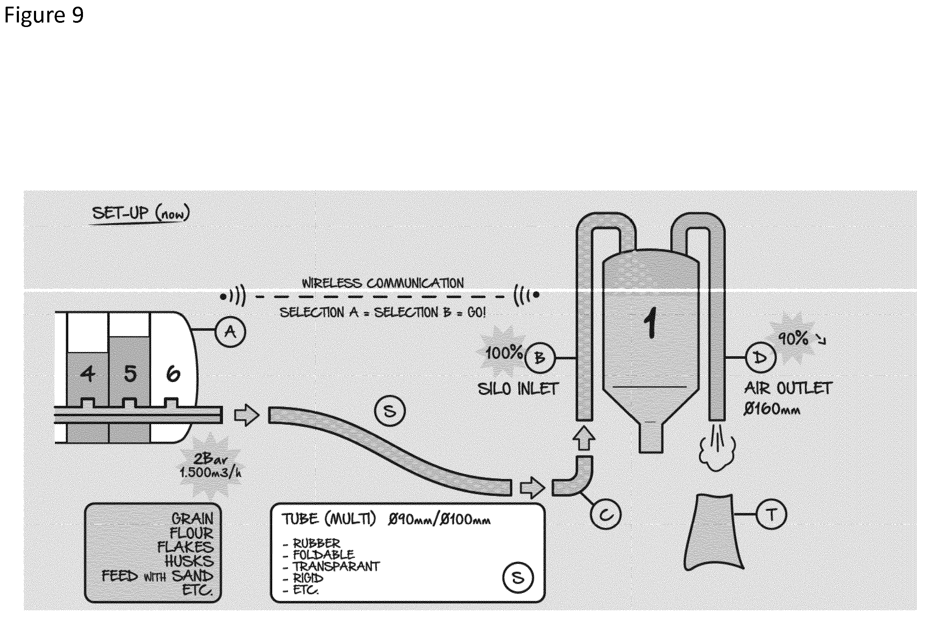

Figure 9 shows another embodiment of an arrangement for automated logical coupling of a trailer to a silo, in combination with the principle of airflow exhaust of a silo, in accordance with the invention. Left a trailer A is depicted having bulk goods in its compartments 4, 5 being transported. These bulk goods, e.g. grain, flour, flakes, husks are to be delivered for example at a farm into silo 1. As indicated in Figure 9, the silo 1 comprises a silo inlet B, being provided onto all silos, and an air outlet D, not provided onto all silos, but for instance only available for 90% of the silos to be loaded. In cases where the air outlet D is not present, alternatives for bringing air in the silo can be provided, such as for example by means of a venting system on top of the silo. A dust bag T is illustrated below the air outlet D, for the collection of dust particles during the airflow process as previously described with Figure 7. Tubes S, C are shown for conveying the bulk goods from the trailer A to the silo 1. Where tube S, having a diameter of for instance 90 - 100mm and for example being made of rubber, possibly foldable and transparent, is represented as the long hose between the trailer A and the silo 1, tube C is rather a connection part between the long conveying route followed by tube S and the silo inlet B. Instead of just one tube S as depicted here, there are also embodiments having a plurality of tubes to be connected with the trailer, for releasing material to a storage facility having more than one silo. Referring back to Figure 9, wireless communication is present between trailer A and silo 1. Such wireless communication is for example characterized by a tag-reader system, i.e. a tag provided on silo 1 is in communication with or is read by a reader provided on trailer A. Whenever this wireless link is confirming that the bulk goods of trailer A are indeed to be supplied to silo inlet B, a go can be given for release of the material. It is noted that, according to the embodiment, such confirmation is enabled by silo detection on one hand, and airflow detection on the other hand. With silo detection is meant that a fit of the correct silo with the correct trailer, hence for delivering correct goods, can be given based on wireless communication e.g. by means of tag and reader. Correct delivery of goods is further affirmed by means of airflow detection, indicating whether or not airflows present, and hence whether or not the connection of trailer with silo is justified for delivery of the correct goods. The maximum operating pressure in the trailer is for example 2Bar, and thus also for the goods being transferred to the silo. The maximum air volume capacity through the loading tube can be for instance 1500m³/h. in case of air mixed with goods, this capacity will of course be lower.

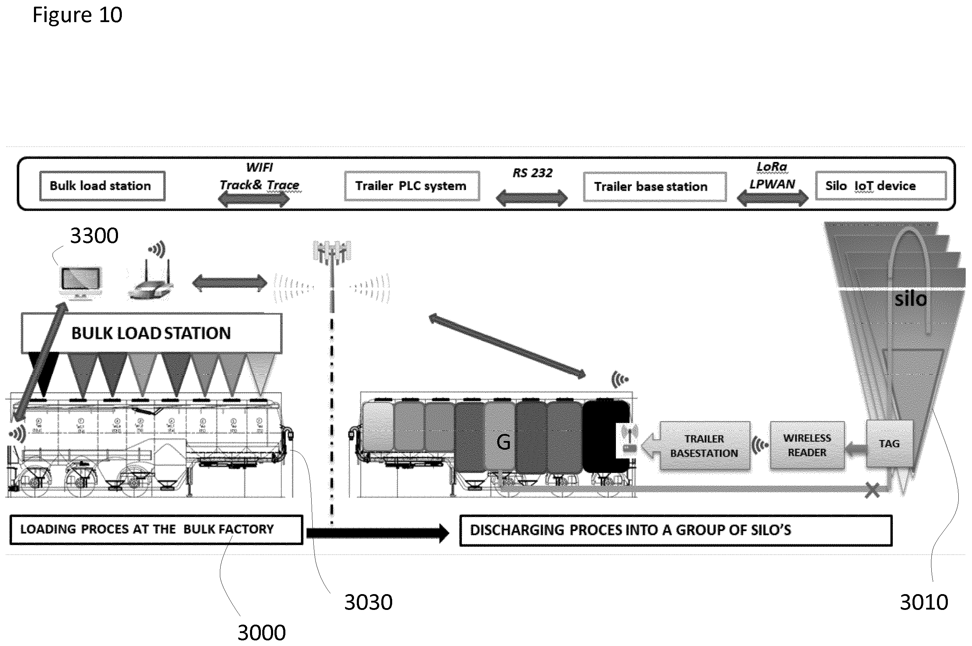

Figure 10 shows an embodiment of a bulk load station for loading a trailer transporting material to be transferred to a silo. A bulk load station is provided at a bulk factory 3000 where bulk goods are stored and deposited in trailers 3030, to be delivered to silos 3010 at remote locations. A computer 3300 is provided with the bulk load station wherein information is kept regarding the preloading process, meaning the way the trailers 3030 need to be loaded in advance, for releasing afterwards correct goods in required weight and volume to the correct silos 3010. The identification of which compartment of the trailer needs to supplied with what kind of material, and how much of it, is controlled by means of the computer 3300. It is noted that a tag-reader system could also be used for the identification process. Whenever the loading process of the trailer 3030 is completed, the trailer 3030 can leave the bulk factory 3000, and drive to the one or more different storage facilities and/or silos 3010 for delivering the bulk goods it is carrying. The trailer 3030 is provided with a track a trace system, meaning that the trailer 3030 can be traced or followed. In other words, a real-time communication is present between the bulk factory 3000 and the trailer 3030 where it has been loaded by means of the bulk load station. On the trailer 3030 itself, there is also communication provided, in particular via RS232 between the trailer PLC system and the trailer base system, for reading or transferring data. Whenever the trailer 3030 reaches one of his destinations, the discharging process can be initiated. According to the embodiment, the silo 3010 wherein the goods have to be transferred is provided with a tag. A wireless reader, provided on the trailer is brought in communication and connection with the tag. The reader then reads the tag, and detects airflow in the tube of the silo 3010 onto which the tag is mounted. While initiating airflow detection, a signal can be given to trailer chauffeur to start the compressor of the trailer 3030, and hence give an air pulse to the loading tubes and the hoses, such that air is blown through the silo 3010 including tubes and hoses. In case of airflow detection, there is certainty that correct trailer compartment G is connected with the right silo 3010. The information read out by the reader including regarding airflow detection is wirelessly submitted to the trailer base station of the trailer 3030 by means of LoRa communication. Whereas the trailer base station is in direct communication with the trailer PLC system via RS232, the information can be visualized by means of the PLC user interface or controller console in the control box at the back of the trailer 3030. Moreover, as the trailer PLC system knows what is to be delivered where, and in what amount, the information from the silo side, as read by the reader at the trailer side, can be compared with the information at the trailer side, and thus give a release 'go' for transferring the correct bulk goods from compartment G of the trailer 3030 to the silo 3010. In case there is no match read by the reader out of the tag and/or there is no airflow detected, there will be no release, and thus a 'no go', for delivering the goods.

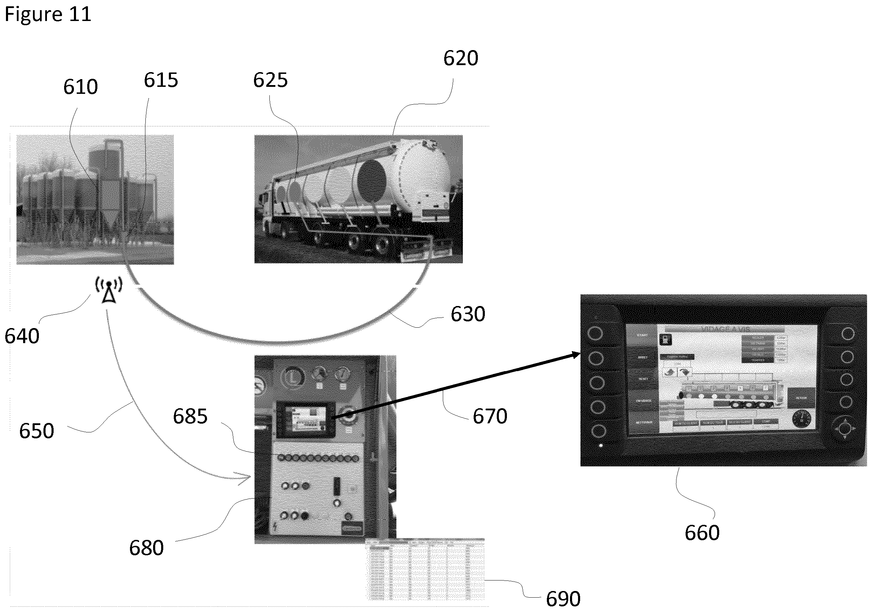

Figure 11 shows an embodiment of a control system user interface 660 for visualizing material as stored in a compartment 625 of a trailer 620 to be released to the one of the appropriate silos 610. The material is conveyed from trailer 620 to silo 610 by means of a tube 630, herewith connected with the inlet of the silo 610, onto which a tag 615 is mounted. A reader can read the tag 615. The information from the tag 615 is thus wirelessly communicated 640 with the trailer 620, more in particular a connection 650 is herewith made with the PLC system and corresponding user interface 660 of the trailer 620. As mentioned earlier such PLC system is in direct connection with he trailer base station via RS232. Further depicted in Figure 11 is the arrow 670 indicating the zoom out of the PLC user interface 660, which is provided on the back of the trailer 620 together with or integrated with the control box 680. Only one light 685 is lit up of the control box 680, meaning that only the first compartment 625 of the trailer 620 can be released or unloaded. In case for instance that two lights are lit up, this would imply that two compartments of the trailer 620 can be unloaded. The lights are in fact an indication for which surface valves can be activated, for opening the compartment and hence releasing material.

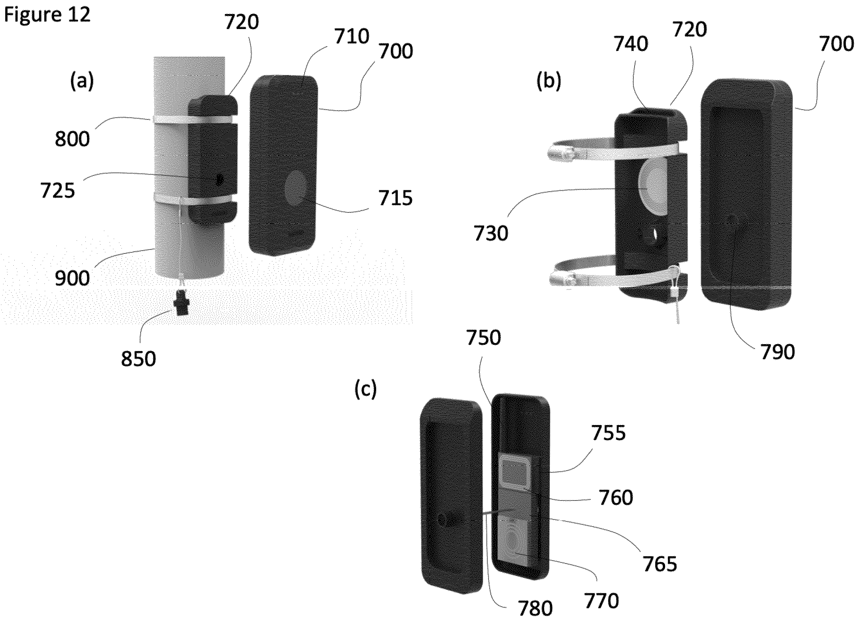

Figure 12 shows an embodiment of tag 720 and reader 700 for automated logical coupling of a trailer to a silo. In Figure 12 (a) both tag 720 and reader 700 are shown, wherein the tag 720 is mounted or hung up onto a tube 900 of a silo by means of belts 800. Within the tag 720, a hole 725 is provided that can be closed by means of the plug 850 hanging onto one of the belts 800 with a cord. Both tag 720 and reader 700 are shown is perspective front view. Onto the front surface of the reader 700, are also provided a large circular LED indication 715 for indicating airflow detection and a series of small LED indications 710 for indicating positive tag-reader connection (meaning that correct coupling is made). In Figure 12 (b) tag 720 and reader 700 are shown in back perspective view. At the backside or surface of the tag 720, the NFC tag component 730 is illustrated. At the top or upper side of the tag 720 a hook or bracket system 740 is viewed, for hooking the reader 700 onto the tag 720. The backside of the reader 700 is provided with a protrusion 790 to be protruded into the hole 725 of the tag 720. Out of the protrusion 790, a sensor 780 for airflow detection is further protruding, although not shown in Figure 12 (b), being visible in Figure 12 (c). Within the tube 900, an opening is provided at the height of the hole 725 and protrusion 790, out of which sensor 780 is protruding. The sensor 780 is herewith brought into the tube, for detecting airflow therein. Further in Figure 12 (c) are shown part of the inner components of the reader 700, such as for example the LoRa antenna 750, battery 755, the NFC antenna 760, a PCB 765 and a wireless charging antenna 770.

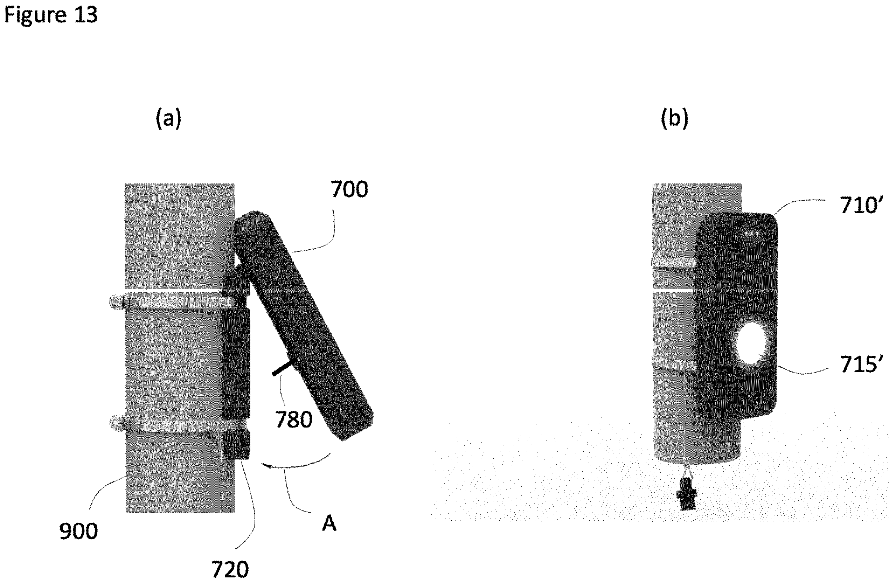

Figure 13 shows an embodiment of the working principle of tag-and-reader system for automated logical coupling of a trailer to a silo. In Figure 13 (a) is shown how the reader 700 can be hooked onto the tag 720 in the direction of the arrow A. The sensor 780 for airflow detection protruding out of the reader 700 is thus brought into the tube 900 while the reader 700 gets connected (in wireless communication) with the tag 720. In Figure 13 (b) LED indications 710', 715' are both lit up, indicating herewith that both airflow detection and tag-reader connection have succeeded with positive outcome, meaning that coupling of trailer with silo is correct, and thus material or bulk goods can be transferred from trailer to silo.

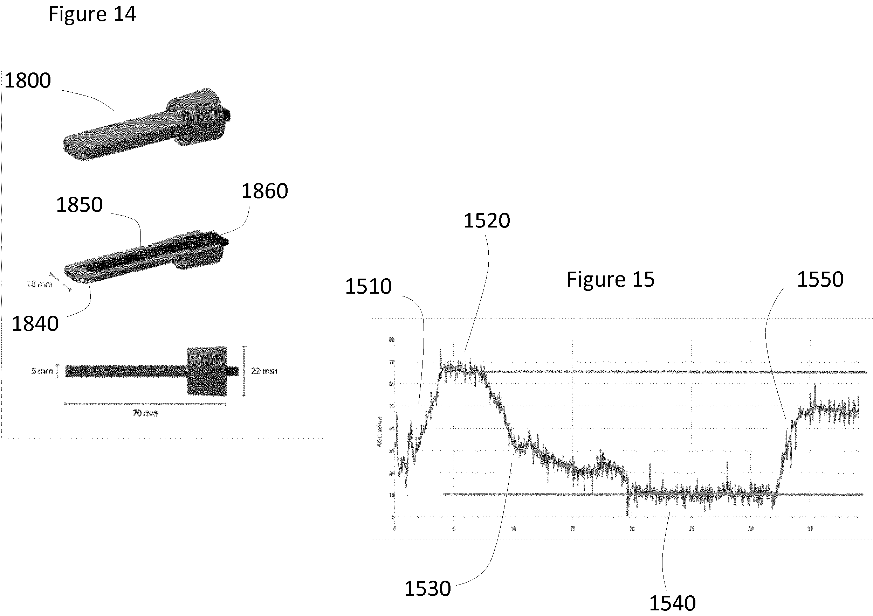

Figure 14 shows an embodiment of a sensing system for detecting airflow in an arrangement for automated logical coupling of a trailer to a silo. The sensing system 1800 is for example a flex sensor or bend sensor, provided with an elastic protective sleeve 1840 to be provided within the reader assembly. Whenever reader is mounted or brought onto tag, the sensor is placed in the filling or dust pipe. The reader can be placed on either the filling pipe or dust pipe. The sleeve 1840 wherein the sensing component 1850 is embedded will bend due to the airflow and herewith causing vibrations. Inside the sleeve 1840 the bend sensor component is coupled to a wire connection 1860 or PCB with which a frequency, or ohm value, or else voltage or ADC values are registered. Subsequently, based on the values registered, a confirmation is sent to the trailer via a LoRa device that airflow was detected. Instead of a flex sensor or bend sensor, an accelerometer, or a tilt ball sensor could also be used or airflow detection. By means of example, possible dimensions of the sensor 1800 are illustrated with Figure 14.

Figure 15 shows a graphical representation of the airflow as detected in an arrangement for automated logical coupling of a trailer to a silo in accordance with the invention. Bending or flexing of the sensor causes a change in value of e.g. resistance or voltage, or ADC value, which is illustrated with Figure 15. Left in the graph, is the moment that the compressor of the trailer is put on, and hence airflow is brought into the tube or air exhaust. As a result, an increase 1510 in ADC value is measured, resulting from the bending of the sensor. Peak values 1520 indicate airflow present in the tube. Turning off the compressor will take away the airflow pressure, and hence a decrease 1530 in ADC value can be measured until the low level 1540 is reached. A second increase 1550, turning on the compressor again, is also illustrated.

## Claims

1. An arrangement comprising: (i) a storage facility (10) comprising one or more silos, each with a joint (20, 2000); and (ii) a trailer (30) provided with a storage means (40) and a connection means (50), connected to said storage means (40) and connectable to one of said joints (20, 2000), wherein at least one of said one or more silos is provided with a first wireless communication means (100), said connection means (50) being movably with respect to either said storage means (40) in a first unconnected joint position (P1) or either with respect to one of said joints (20, 2000) of said one or more silos in a second connected joint position (P2), and said connection means (50) being movable between the first unconnected joint position (P1) and the second connected joint position (P2), said connection means (50) further being provided with a second wireless communication means (110), capable to communicate (400) with said first wireless communication means (100) when said connection means (50) being in said second connected joint position (P2), **characterized in that** said connection means (50) can also detect airflow.

2. The arrangement of claim 1, wherein said trailer (30) is provided with a third wireless communication means (200), said connection means (50) further being provided J Z with a fourth wireless communication means (210) adapted for communication (410) with said third wireless communication means (200) while being in either one of said first or second positions (P1, P2).

3. The arrangement of claim 1 or 2, wherein said trailer (30) is provided with an energy transfer means (310), said connection means (50) being provided with energy reception means (300) adapted for transfer of energy (500) from said energy transfer means (310) when said connection means (50) being in said first unconnected joint position (P1), more preferably said connection means (50) comprises an energy storage means (320).

4. The arrangement of claim 1 to 3, wherein said connection means (50) being adapted for secure connection for said storage facility (10) comprising at least two silos, each with a joint (20), and said joints (20) being in the vicinity of each other.

5. A method for identifying whether the supply line between a storage means (40) of a trailer (30) and a joint (20, 2000) of a silo for transferring material from said trailer (30) to a storage facility (10) comprising at least said silo with said joint (20, 2000) amongst one or more silos, each having one or more joints, is correctly placed, wherein said silo is provided with a first wireless communication means (100), said method comprising: (i) bringing a connection means (50), related to said storage means (40), to said joint (20, 2000), being in the vicinity of said first wireless communication means (100), where said connection means (50) being provided with a second wireless communication means (110), capable to communicate (400) with said first wireless communication means (100) when said connection means (50) being in a connected joint position (P2) and **characterized in that** said connection means (50) can also detect airflow; (ii) upon communication between said wireless communication means (100, 110), blowing air through said joint (20, 2000); and (iii) upon detection of airflow through said joint (20, 2000), providing approval for transfer of material from said trailer (30) to said silo of said storage facility (10).

## Patentansprüche

1. Anordnung, umfassend: (i) eine Lagereinrichtung (10), die ein oder mehrere Silos umfasst, jeweils mit einem Anschluss (20, 2000); und (ii) einen Anhänger (30), der mit einem Lagermittel (40) und einem Verbindungsmittel (50) bereitgestellt ist, das mit dem Lagermittel (40) verbunden und mit einem der Anschlüsse (20, 2000) verbindbar ist, wobei mindestens eines der ein oder mehreren Silos mit einem ersten drahtlosen Kommunikationsmittel (100) bereitgestellt ist, wobei das Verbindungsmittel (50) bezüglich entweder des Lagermittels (40) in einer ersten nicht verbundenen Anschlussposition (P1) oder bezüglich eines der Anschlüsse (20, 2000) der ein oder mehreren Silos in einer zweiten verbundenen Anschlussposition (P2) beweglich ist, und das Verbindungsmittel (50) zwischen der ersten nicht verbundenen Gelenkposition (P1) und der zweiten verbundenen Gelenkposition (P2) beweglich ist, wobei das Verbindungsmittel (50) ferner mit einem zweiten drahtlosen Kommunikationsmittel (110) bereitgestellt wird, das in der Lage ist, mit dem ersten drahtlosen Kommunikationsmittel (100) zu kommunizieren (400), wenn sich das Verbindungsmittel (50) in der zweiten verbundenen Anschlussposition (P2) befindet, **dadurch gekennzeichnet, dass** das Verbindungsmittel (50) auch Luftströmung detektieren kann.

2. Anordnung nach Anspruch 1, wobei der Anhänger (30) mit einem dritten drahtlosen Kommunikationsmittel (200) bereitgestellt ist, wobei das Verbindungsmittel (50) ferner mit einem vierten drahtlosen Kommunikationsmittel (210) bereitgestellt ist, das für die Kommunikation (410) mit dem dritten drahtlosen Kommunikationsmittel (200) angepasst ist, während es sich in einer der ersten oder zweiten Positionen (P1, P2) befindet.

3. Anordnung nach Anspruch 1 oder 2, wobei der Anhänger (30) mit einem Energieübertragungsmittel (310) bereitgestellt ist, wobei das Verbindungsmittel (50) mit Energieaufnahmemitteln (300) bereitgestellt ist, die für die Übertragung von Energie (500) von dem Energieübertragungsmittel (310) angepasst sind, wenn sich das Verbindungsmittel (50) in der ersten nicht verbundenen Anschlussposition (P1) befindet, wobei das Verbindungsmittel (50) mehr bevorzugt ein Energiespeichermittel (320) umfasst.

4. Anordnung nach Anspruch 1 bis 3, wobei das Verbindungsmittel (50) für eine sichere Verbindung für die Lagereinrichtung (10) ausgelegt ist, die mindestens zwei Silos umfasst, jeweils mit einem Anschluss (20), und wobei sich die Anschlüsse (20) nahe beieinander befinden.

5. Verfahren zum Identifizieren, ob die Zuleitung zwischen einem Lagermittel (40) eines Anhängers (30) und einem Anschluss (20, 2000) eines Silos zur Übertragung von Material von dem Anhänger (30) zu einer Lagereinrichtung (10), die mindestens das Silo mit dem Anschluss (20, 2000) unter einem oder mehreren Silos umfasst, von denen jedes einen oder mehrere Anschlüsse aufweist, korrekt platziert ist, wobei das Silo mit einem ersten drahtlosen Kommunikationsmittel (100) bereitgestellt ist, wobei das Verfahren umfasst: (i) Verbringen eines Verbindungsmittels (50), das mit dem Lagermittel (40) in Verbindung steht, zu dem Anschluss (20, 2000), der sich in der Nähe des ersten drahtlosen Kommunikationsmittels (100) befindet, wobei das Verbindungsmittel (50) mit einem zweiten drahtlosen Kommunikationsmittel (110) bereitgestellt ist, das in der Lage ist, mit dem ersten drahtlosen Kommunikationsmittel (100) zu kommunizieren (400), wenn sich das Verbindungsmittel (50) in einer verbundenen Anschlussposition (P2) befindet und **dadurch gekennzeichnet, dass** das Verbindungsmittel (50) auch Luftströmung detektieren kann; (ii) bei Kommunikation zwischen den drahtlosen Kommunikationsmitteln (100, 110), Blasen von Luft durch den Anschluss (20, 2000); und (iii) bei Detektieren einer Luftströmung durch den Anschluss (20, 2000), Bereitstellen einer Genehmigung zur Übertragung von Material von dem Anhänger (30) zu dem Silo der Lagereinrichtung (10).

## Revendications

1. Agencement comprenant : (i) une installation de stockage (10) comprenant un ou plusieurs silos, chacun avec un joint (20, 2000) ; et (ii) une remorque (30) pourvue d'un moyen de stockage (40) et d'un moyen de liaison (50), relié audit moyen de stockage (40) et pouvant être relié à l'un desdits joints (20, 2000), dans lequel au moins l'un parmi ledit ou lesdits silos est pourvu d'un premier moyen de communication sans fil (100), ledit moyen de liaison (50) pouvant être déplacé soit par rapport audit moyen de stockage (40) dans une première position de joint non reliée (P1), soit par rapport à l'un desdits joints (20, 2000) dudit ou desdits silos dans une seconde position de joint reliée (P2), et ledit moyen de liaison (50) pouvant être déplacé entre la première position de joint non reliée (P1) et la seconde position de joint reliée (P2), ledit moyen de liaison (50) étant en outre pourvu d'un deuxième moyen de communication sans fil (110), capable de communiquer (400) avec ledit premier moyen de communication sans fil (100) lorsque ledit moyen de liaison (50) est dans ladite seconde position de joint reliée (P2), **caractérisé en ce que** ledit moyen de liaison (50) peut également détecter un flux d'air.

2. Agencement selon la revendication 1, dans lequel ladite remorque (30) est pourvue d'un troisième moyen de communication sans fil (200), ledit moyen de liaison (50) étant en outre pourvu d'un quatrième moyen de communication sans fil (210) adapté pour une communication (410) avec ledit troisième moyen de communication sans fil (200) tout en étant dans l'une ou l'autre desdites première ou seconde positions (P1, P2).

3. Agencement selon la revendication 1 ou 2, dans lequel ladite remorque (30) est pourvue d'un moyen de transfert d'énergie (310), ledit moyen de liaison (50) étant pourvu d'un moyen de réception d'énergie (300) adapté pour un transfert d'énergie (500) à partir dudit moyen de transfert d'énergie (310) lorsque ledit moyen de liaison (50) est dans ladite première position de joint non reliée (P1), plus préférablement ledit moyen de liaison (50) comprend un moyen de stockage d'énergie (320).

4. Agencement selon la revendication 1 à 3, dans lequel ledit moyen de liaison (50) est adapté pour une liaison sécurisée pour ladite installation de stockage (10) comprenant au moins deux silos, chacun avec un joint (20), et lesdits joints (20) étant à proximité l'un de l'autre.

5. Procédé permettant d'identifier si la conduite d'alimentation entre un moyen de stockage (40) d'une remorque (30) et un joint (20, 2000) d'un silo permettant de transférer un matériau de ladite remorque (30) à une installation de stockage (10) comprenant au moins ledit silo avec ledit joint (20, 2000) parmi un ou plusieurs silos, chacun ayant un ou plusieurs joints, est correctement placée, dans lequel ledit silo est pourvu d'un premier moyen de communication sans fil (100), ledit procédé comprenant : (i) le fait d'amener un moyen de liaison (50), se rapportant audit moyen de stockage (40), vers ledit joint (20, 2000), étant à proximité dudit premier moyen de communication sans fil (100), où ledit moyen de liaison (50) est pourvu d'un deuxième moyen de communication sans fil (110), capable de communiquer (400) avec ledit premier moyen de communication sans fil (100) lorsque ledit moyen de liaison (50) est dans une position de joint reliée (P2) et **caractérisé en ce que** ledit moyen de liaison (50) peut également détecter un flux d'air ; (ii) lors d'une communication entre lesdits moyens de communication sans fil (100, 110), le soufflage d'air à travers ledit joint (20, 2000) ; et (iii) lors d'une détection de flux d'air à travers ledit joint (20, 2000), la fourniture d'une approbation pour transférer un matériau de ladite remorque (30) audit silo de ladite installation de stockage (10).
